# FASCICULE DE BREVET EUROPEEN

(11) **EP 0 543 698 B1**
(45) Date de publication et mention de la délivrance du brevet: **17.07.1996**
(21) Numéro de dépôt: 92403022.4
(22) Date de dépôt: 10.11.1992
(51) Int. Cl.: G06F 11/22

(54) **Dispositif d'éxploitation des informations relatives aux pannes détectées par une ou plusieurs unités centrales d'un aéronef**
Vorrichtung zur Benutzung von Fehlerinformationen eines Einzel- oder Mehrrechnersystems eines Flugzeuges
Device for employment of fault information in a single/multi-computer aircraft system

(30) Priorité: 22.11.1991 FR 9114381
(43) Date de publication de la demande: 26.05.1993
(73) Titulaire: AEROSPATIALE Société Nationale Industrielle, F-75781 Paris Cédex 16 (FR)
(72) Inventeur: Noger, Joel, F-31770 Colomiers (FR)
(74) Mandataire: Bonnetat, Christian

(56) Documents cités:
- US-A- 4 770 116
- US-A- 4 995 037
- 2nd ANNUAL ARTIFICIAL INTELLIGENCE AND ADVANCED COMPUTER TECHNOLOGY CONFERENCE, Wheaton, Etats-Unis d'Amérique, 29 Avril - 1 Mai 1986, A. M. STANLEY: 'CEPS - An Expert System as a Maintenance Diagnostic Aid', pp. 319-327
- IEEE NATIONAL AEROSPACE AND ELECTRONICS CONFERENCE NAECON 1986, Dayton, Etats-Unis d'Amérique, 19-23 Mai 1986, J.H. WHITE et al.: 'Multi Purpose Aircraft Monitoring with a Smart Recorder', pp. 1120-1127

## Description

La présente invention concerne un dispositif permettant l'exploitation des pannes détectées et mémorisées par l'unité centrale d'un ou plusieurs calculateurs d'un aéronef.

Lors du vol d'un aéronef, chacun des calculateurs de celui-ci exerce une surveillance de son propre fonctionnement, et éventuellement de celui des autres, de façon à déceler rapidement toute panne et en confiner les effets, et en particulier éviter d'envoyer des ordres incorrects. De même, les divers organes de l'aéronef sont surveillés de façon à déceler rapidement toute anomalie, pouvoir la signaler, et éventuellement tenter d'y remédier. Le contexte d'une panne est mémorisé, si le calculateur en est encore capable, de façon qu'une analyse fine ultérieure permette de localiser l'élément en panne ou de trouver un défaut logiciel propre au contexte. De façon à fiabiliser le système et à lever les ambiguïtés pouvant surgir de pannes dues au calculateur et non aux organes de l'aéronef, on implante au moins deux calculateurs réalisant la même fonction.

Pendant les opérations de maintenance au sol, les informations de pannes, mémorisées au niveau de chaque calculateur dans une mémoire non volatile, sont visualisées de façon à analyser le contexte et déterminer l'élément de ce calculateur ou l'organe ayant créé la panne, ainsi que le motif probable de cette panne. Cette exploitation des informations peut être effectuée en utilisant un système centralisé de scrutation intégré à l'aéronef, qui, au moyen d'un menu, permet au technicien de maintenance de visualiser successivement le contenu de zones de mémoire relatives aux diverses pannes détectées. Cette méthode est cependant assez lente, car il faut choisir successivement, au moyen du menu, l'ensemble des zones mémoires d'un calculateur, ce qui peut nécessiter 20 minutes, puis examiner le calculateur suivant. De plus, la présentation des informations est assez médiocre car l'interface de sortie du calculateur concerné est une interface à protocole de communication très élémentaire ne pouvant commander qu'une imprimante assez rudimentaire, à impression thermique par exemple, à nombre de colonnes limité à 16 par exemple. Il faut procéder de même pour les autres calculateurs, et on aboutit à de grandes longueurs de rouleaux de papier, peu faciles à manipuler, et sur lesquels les mêmes informations ne sont pas toujours dans le même ordre si les diverses pages du menu n'ont pas été appelées selon une même séquence. De plus, la sortie des informations se faisant uniquement de façon visuelle, sur papier ou éventuellement sur écran, cela interdit toute exploitation autre que manuelle qui utiliserait un calculateur de maintenance apte à traiter automatiquement les données issues des divers calculateurs.

On peut évidemment songer à transférer les données parvenant à l'imprimante vers un calculateur de maintenance situé dans un centre de calcul, mais un tel transfert, à plusieurs centaines de mètres, nécessiterait l'adjonction d'interfaces adaptées au transfert à une telle distance et alimentées par l'alimentation des calculateurs de l'aéronef, ce qui en accroîtrait la taille et le poids.

De même, on peut aussi déposer les calculateurs et les passer sur un banc de test pour tester leurs divers modules, mais ce changement de place modifie les conditions de fonctionnement du calculateur, telles la température, et peut masquer des pannes n'apparaissant que dans des conditions marginales d'environnement.

Le document US-A-4 470 116 décrit un système de surveillance d'un aéronef pour réaliser à bord la detection et l'analyse de fonctions des calculateurs de l'aéronef.

La présente invention vise vise à éviter ces inconvénients.

A cet effet, selon l'invention, le dispositif d'exploitation des informations relatives aux pannes détectées par une unité centrale d'un aéronef qui est reliée par un bus d'adresse et de données à une première mémoire mémorisant ces informations, est remarquable en ce qu'il comporte :
- une deuxième mémoire non volatile, amovible, connectable audit bus ;
- des moyens de test de présence pour détecter la présence éventuelle de ladite deuxième mémoire ;
- des moyens de libération, aptes à libérer, pour d'autres tâches, l'unité centrale ;
- des premiers moyens d'adressage en lecture et des premiers moyens de mémorisation, respectivement aptes à lire, à des adresses prédéterminées, et à mémoriser :
   . la valeur de la première adresse de ladite première mémoire,
   . la valeur de la première adresse de ladite deuxième mémoire,
   . le nombre d'adresses de la première mémoire dont le contenu est à transférer vers la deuxième mémoire ;
- des deuxièmes moyens d'adressage en lecture de la première mémoire et des seconds moyens de mémorisation temporaire du contenu correspondant ;
- des moyens d'adressage en écriture de la deuxième mémoire ;
- des moyens d'incrémentation, aptes à ajouter un incrément aux adresses de la première et de la deuxième mémoire ;
- des moyens comparateurs, aptes à déterminer si le cumul desdits incréments est égal à un nombre prédéterminé, et, si oui, à commander lesdits moyens de libération ;
- des moyens de branchement, commandés par lesdits moyens comparateurs, aptes, en cas d'inégalité détectée par ces derniers, à modifier l'adresse de programme à exécuter.

On peut ainsi, lorsque la deuxième mémoire est présente, y recopier les informations relatives aux pannes et contenues dans la première mémoire qui, de préférence, est aussi non volatile. Le fait que cette deuxième mémoire soit amovible permet de la transporter et de la faire lire par un calculateur de maintenance qui peut ensuite l'imprimer sur une imprimante parallèle, ce qui offre une présentation de "listing" usuel plus compacte que celle d'un rouleau étroit de papier. De plus, ce calculateur de maintenance peut effectuer une analyse des données.

Ladite deuxième mémoire peut être raccordée à l'unité centrale par un support de circuit intégré. On peut ainsi enlever aisément cette deuxième mémoire, sans qu'il y ait, pour ce faire, nécessité d'ajouter beaucoup de matériel.

De façon alternative, ladite deuxième mémoire peut être implantée sur un module amovible, ce qui permet d'éviter de détériorer les connexions propres au circuit intégré constituant cette deuxième mémoire.

Avantageusement, ledit module amovible est porté par le module de l'unité centrale, ce qui augmente la compacité de l'ensemble.

De plus, il est pratique que ledit module amovible comporte des moyens de connexion permettant l'enlèvement de ce module amovible sans déconnecter le module de l'unité centrale du bus de fond de cage, ce qui évite l'arrêt du calculateur.

De même, ledit module amovible peut être implantable à l'emplacement d'un module de scrutation centralisée de ladite première mémoire, ce qui évite de prévoir un emplacement de connecteur supplémentaire.

De préférence, on utilise un dispositif d'exploitation des informations relatives aux pannes, comportant plusieurs unités centrales par aéronef mémorisant lesdites pannes dans des premières mémoires respectivement reliées à l'unité centrale correspondante par un bus d'adresse et de données, remarquable en ce qu'il comporte plusieurs dispositifs tels que décrits précédemment.

On dispose ainsi d'informations pouvant être redondantes, exploitées soit visuellement soit par le calculateur de maintenance.

Les figures du dessin annexé feront bien comprendre comment l'invention peut être réalisée. Sur ces figures, des références identiques représentent des éléments identiques ou semblables.

La figure 1 représente l'unité centrale d'un calculateur de l'aéronef, à laquelle est raccordé un module portant une deuxième mémoire.

La figure 2 est un organigramme illustrant le transfert des informations d'une première mémoire de cette unité centrale vers la deuxième mémoire.

La figure 3 est un synoptique illustrant divers éléments permettant de réaliser ledit organigramme.

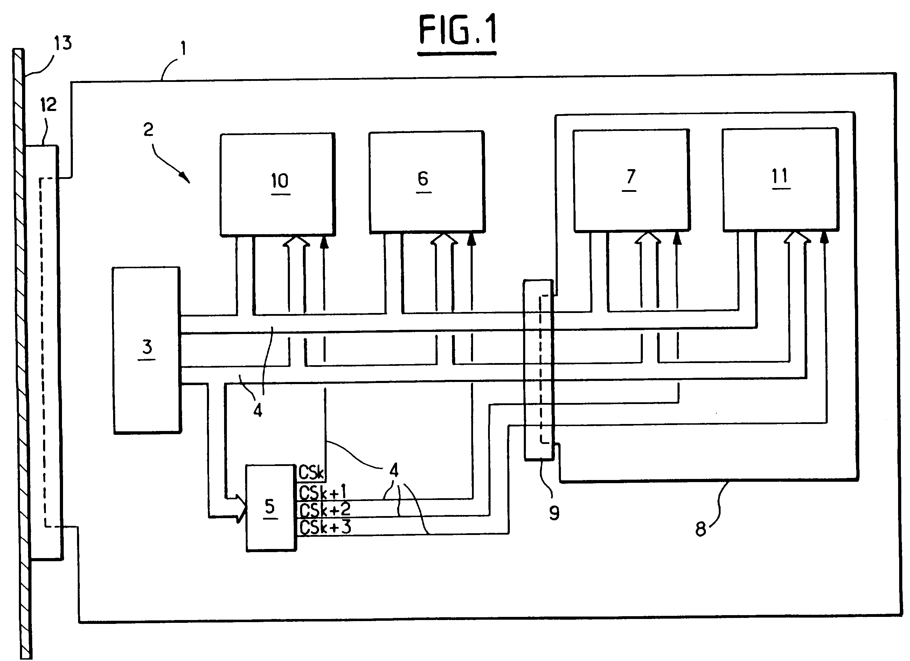

Le module 1 portant l'unité centrale 2 d'un calculateur d'aéronef est représenté sur la figure 1. Cette unité centrale 2 comporte un microprocesseur 3, par exemple du type 80186, produit par la société des Etats-Unis d'Amériquee INTEL, relié à un bus 4 local d'adresse et de données. Un décodeur d'adresse 5 reçoit les bits de poids fort de la partie adresse du bus 4 et fournit sur des fils de sortie, spécifiquement à chacun des circuits intégrés indiqués ci-après, des signaux de sélection CSk, avec k entier de valeur spécifique à chaque tel signal. Ces fils de sortie véhiculant les signaux de sélection CSk font partie du bus 4, et l'un peut être, à un instant donné, à un état actif et ainsi apte à valider l'adresse du circuit intégré recevant ce signal de sélection CSk actif. Une première mémoire 6 de type EEPROM (mémoire à lecture seule effaçable électriquement), par exemple de référence commerciale 2864 et de capacité 8 k octets, est raccordée au bus 4, tandis qu'une deuxième mémoire 7 de type EEPROM, identique à la première mémoire 6 et raccordée au bus 4, est implantée sur un module amovible 8 constitué par une carte-fille, portée par le module 1 qui fait office de carte-mère, et est raccordée à celle-ci par un connecteur 9. Cette carte-fille 8 est implantée en face avant de la carte-mère 1 de façon à pouvoir être connectée ou déconnectée sans qu'il y ait nécessité de sortir la carte-mère 1 de son emplacement. Une troisième mémoire 10, de type EPROM (mémoire à lecture seule effaçable), par exemple de référence commerciale 2764, implantée sur la carte-mère 1 et reliée au bus 4, comporte le logiciel résident, permettant l'initialisation du calculateur lors de la mise sous tension et comportant les divers logiciels d'exploitation. Une quatrième mémoire 11, de type EPROM, pouvant être identique à la troisième mémoire 10, raccordée au bus 4 et implantée sur la carte-fille 8, est une mémoire morte comportant le logiciel fonctionnel permettant un accès en lecture à la première mémoire 6 et un accès en écriture à la deuxième mémoire 7. La carte-mère 1 est raccordée par un connecteur 12, placé à l'arrière de cette carte-mère 1, à un bus de fond de cage 13, commun à plusieurs modules, ces derniers pouvant, par exemple, être des coupleurs rapatriant des données d'état de divers organes de l'aéronef ou d'éléments d'autres calculateurs.

Il apparaîtra à l'homme du métier que chaque mémoire peut être constituée par plusieurs circuits mémoires, de façon à atteindre le nombre d'adresses et le format de mot voulus. De même, il a été décrit quatre mémoires, de deux technologies différentes, mais il est aussi possible de regrouper les fonctions de la première mémoire 6 et de la troisième mémoire 10 en une seule mémoire apte à retenir l'information en cas de coupure de l'alimentation électrique, par exemple une mémoire EEPROM. Il en est de même pour les deuxième mémoire 7 et quatrième mémoire 11. D'autres technologies, telles que mémoires magnétiques à bulles peuvent aussi être utilisées, lorsqu'une grosse capacité mémoire est nécessaire.

Le fonctionnement de ce module 1 est le suivant. Lors du déroulement des divers programmes d'exploitation contenus dans la troisième mémoire 10, le microprocesseur 3 vérifie l'absence de défaut de fonctionnement, par des moyens connus tels que codes redondants, temporisations, ou autres. En cas de défaut, ce microprocesseur 3 écrit alors, dans la première mémoire 6, le contexte, c'est-à-dire la configuration des divers éléments matériels et logiciels intervenants. Il peut même servir à réaliser une fonction perturbographe, en mémorisant l'historique avant le défaut, ceci étant réalisé en mémorisant systématiquement les contextes successifs et en les effaçant cycliquement s'il n'est pas advenu de défaut. Les contextes des divers défauts, permanents ou transitoires, apparus lors du fonctionnement du calculateur, sont ainsi mémorisés dans des zones mémoires d'adresses successives. De façon à éviter ultérieurement la recopie de zones mémoire non écrites, on peut prévoir un pointeur indiquant le nombre d'adresses où une écriture a été effectuée. La valeur T de ce pointeur peut être écrite, par exemple, à la première adresse de cette première mémoire 6.

Pour effectuer une recopie du contenu de la première mémoire 6 dans la deuxième mémoire 7, on déroule le programme correspondant, qui est contenu dans la quatrième mémoire 11. L'ordre de déclenchement de ce programme de recopie peut être transmis explicitement au microprocesseur 3 par tout moyen, tel que bouton-poussoir, ou être transmis implicitement, par la mise sous tension du calculateur par exemple.

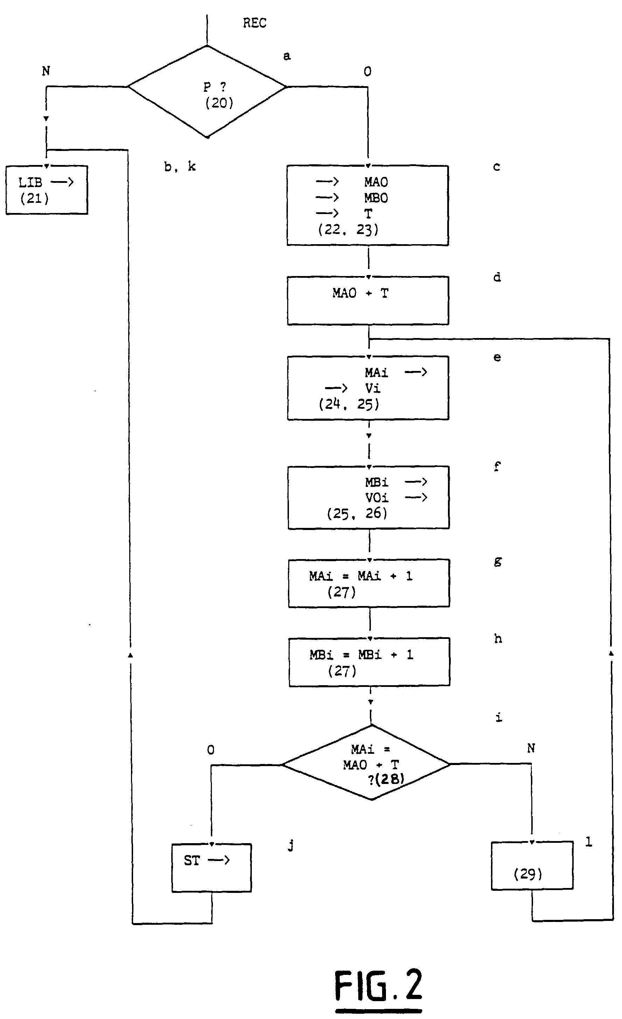

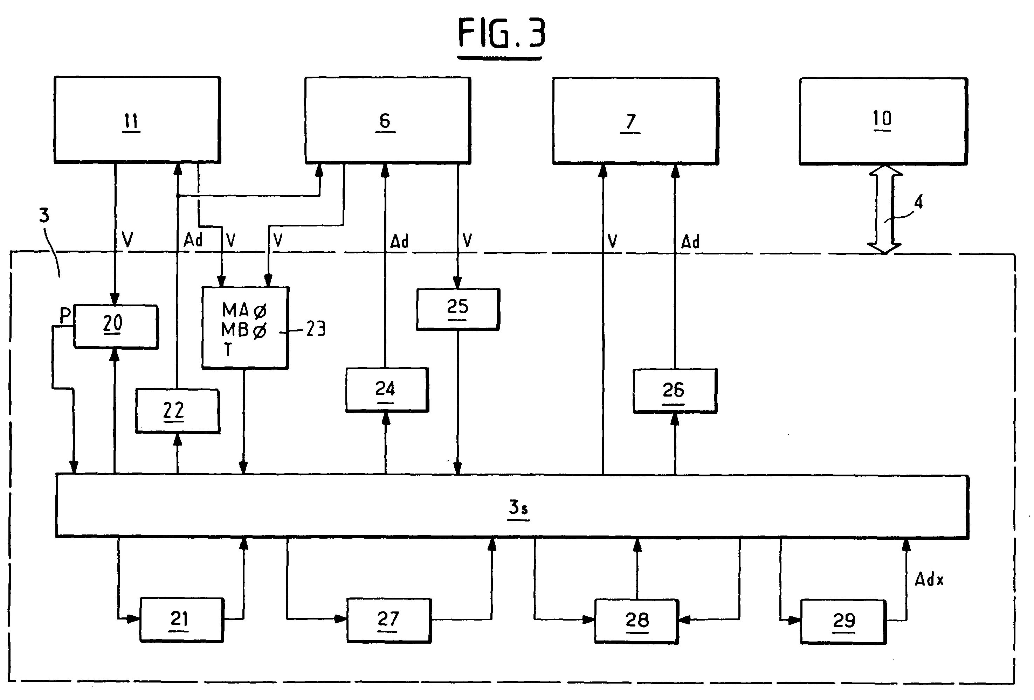

Le déroulement de ce programme de recopie est décrit par l'organigramme représenté sur la figure 2 et pour lequel la figure 3 explicite certains des éléments utilisés par le microprocesseur 3. Sur cette figure 3, le trajet des informations est schématisé par des lignes spécifiques à chacun des éléments, ceci dans un but de clarté, mais il faut bien comprendre que les liaisons entre le microprocesseur 3 et les diverses mémoires utilisent physiquement le bus 4, qui est symbolisé par V ou Ad selon que la ligne spécifique considérée représente la partie valeur ou adresse de ce bus 4. Comme indiqué précédemment, la quatrième mémoire 11 contient le programme de recopie et est cycliquement lue par le microprocesseur 3 à travers le bus 4. Le séquenceur du microprocesseur 3 est repéré 3s. Les éléments référencés 20 à 29 décrits ci-après comportent des constituants matériels pouvant être inclus dans le microprocesseur 3.

Dans cet organigramme de la figure 2, les losanges indiquent une opération de test, dont le résultat positif ou négatif est respectivement indiqué par la lettre O ou N. Les étapes successives sont indiquées par une lettre en dehors du cadre relatif à cette étape, tandis que la référence de l'élément considéré est indiquée entre parenthèses.

L'organigramme comporte les étapes successives suivantes :
a- après avoir reçu l'ordre REC, explicite ou implicite, d'effectuer la recopie du contenu de la première mémoire 6 dans la deuxième mémoire 7, le microprocesseur 3 utilise des moyens de test de présence 20 pour savoir si la quatrième mémoire 11 associée à cette deuxième mémoire 7 est présente dans le calculateur. Ce test peut être effectué en émettant, sur la partie adresse du bus 4, une adresse prédéterminée, dont la valeur est préalablement lue dans la quatrième mémoire 11, puis en lisant la valeur en retour sur la partie valeur de ce bus 4. Si la quatrième mémoire 11 associée à la deuxième mémoire 7 est présente, elle répond en émettant une valeur prédéterminée et connue par le microprocesseur 3 par le fait que cette valeur est aussi mémorisée dans la troisième mémoire 10 à une adresse connue du microprocesseur 3. Des moyens aptes à effectuer une comparaison, faisant partie de ces moyens de test de présence 20, fournissent alors au microprocesseur 3 un signal P si la valeur en retour sur la partie valeur du bus 4 est égale à la valeur attendue qui est appliquée sur une autre entrée de ces moyens de test 20 après avoir été préalablement lue dans la troisième mémoire 10, ce qui atteste alors la présence de la deuxième mémoire 7 ;
b- en cas d'absence de cette deuxième mémoire 7, le microprocesseur 3 utilise des moyens internes de libération 21, émettant un signal LIB, afin de libérer l'unité centrale 2 pour d'autres tâches, ces moyens de libération 21 pouvant comporter un additionneur-soustracteur faisant effectuer un saut d'adresse au programme en cours, vers un autre programme, ou comportant un registre contenant une adresse de branchement ;
c- en cas de présence de cette deuxième mémoire 7, le microprocesseur 3 lit successivement en mémoire, par exemple dans la quatrième mémoire 11, et grâce à des premiers moyens d'adressage en lecture 22, les adresses de début de la première mémoire 6 et de la deuxième mémoire 7, respectivement MAO et MBO, et il lit la valeur T, contenue dans la première mémoire 6, qui indique le nombre de mots ayant des adresses successives à recopier, ces trois valeurs étant provisoirement mémorisées dans des premiers moyens de mémorisation 23 constitués d'un registre interne au microprocesseur 3 ;
d- le microprocesseur 3 calcule alors la valeur MAO + T au moyen de son bloc de calcul, ce qui correspond à l'adresse suivant l'adresse finale de la zone mémoire à recopier ;
e- le microprocesseur 3 adresse en lecture, grâce à des deuxièmes moyens d'adressage en lecture 24, l'adressé MAi, égale à MAO lors de la première lecture, de la première mémoire 6 et mémorise, dans des seconds moyens de mémorisation 25, constitués d'un registre tampon interne, la valeur Vi lue en retour sur la partie valeur du bus 4 ;
f- le microprocesseur 3 adresse en lecture les seconds moyens de mémorisation 25 et adresse en écriture, grâce à des moyens d'adressage en écriture 26, l'adresse MBi de la deuxième mémoire 7, égale à MBO lors de la première écriture, et y écrit la valeur Vi qui a été mémorisée à l'étape précédente dans les seconds moyens de mémorisation 25 ;
g- le microprocesseur 3 ajoute un incrément d'une unité à l'adresse MAi, ceci en utilisant des moyens d'incrémentation 27 constitués d'un additionneur fournissant en retour la valeur MAi + 1 ;
h- le microprocesseur 3 ajoute, avec les mêmes moyens d'incrémentation 27, un incrément d'une unité à l'adresse MBi ;
i- le microprocesseur 3 recherche si le cumul des incréments est égal à T. De façon pratique, il recherche si l'égalité MAi = MAO + T est vérifiée, ceci grâce à des moyens comparateurs 28 de tout type connu, ou un soustracteur qui fournit une sortie nulle en cas d'égalité ;
j- si l'égalité à l'étape ci-dessus est vérifiée, le microprocesseur 3 émet un signal ST mettant fin aux opérations de recopie, et commande l'allumage d'un voyant (non représenté) indiquant la fin de cette recopie ;
k- le microprocesseur 3 se libère alors pour d'autres tâches, grâce auxdits moyens de libération 21 ;
l- si l'égalité ci-dessus n'est pas vérifiée, le microprocesseur 3 revient à l'étape e grâce à des moyens de branchement 29, commandés par lesdits moyens comparateurs 28, aptes, en cas d'inégalité détectée par ces derniers, à modifier l'adresse de programme en cours. Ces moyens de branchement 29 comportent un additionneur-soustracteur apte à modifier l'adresse du programme en cours d'exécution de façon à effectuer un branchement à l'adresse relative au début de l'étape e , ou bien comportent un registre contenant une adresse spécifique Adx.

Dans le cas où l'on veut pouvoir lire rapidement certaines des informations contenues dans la première mémoire 6, par exemple lorsque les informations désirées sont de taille limitée, la troisième mémoire 10 contient alors un logiciel apte à gérer une fonction de scrutation permettant de lire les informations contenues dans la première mémoire 6 et de les communiquer, à travers le bus de fond de cage 13 du calculateur, à un module coupleur pilotant une imprimante ou un écran. Dans le cas général, pour assurer une redondance,. il est implanté plusieurs calculateurs tels que décrits ci-dessus, et cette fonction de scrutation est centralisée et commandée par une interface de relation homme-machine, ce qui permet de choisir de visualiser les données relatives au calculateur voulu. Pour faciliter ce choix, un menu présenté sur l'interface de dialogue homme-machine, imprimante ou écran, est disponible.

Il est à noter que la fonction de recopie exposée ci-dessus peut être portée par une carte-fille 8 spécifique, la fonction de scrutation étant implantée sur une autre carte-fille 8 pouvant se substituer à la précédente, ou, au contraire, la carte-fille 8 peut comporter des mémoires de capacité suffisante pour pouvoir traiter les deux fonctions. Dans un cas comme dans l'autre, la présence de la fonction de recopie peut être détectée par le microprocesseur 3 par une lecture à une adresse prédéterminée, qui ne fournira en retour ladite valeur prédéterminée que si le logiciel correspondant est implanté.

Pour une question de facilité de manipulation, la deuxième mémoire 7, amovible, a été décrite comme étant portée par une carte-fille 8 raccordée à la carte-mère 1 par un connecteur 9. Il est évidemment possible de supprimer la carte-fille 8 et d'implanter les composants de celle-ci directement sur la cartemère 1, la deuxième mémoire 7 étant raccordée au moyen d'un support de circuit intégré, ce qui conserve l'amovibilité de cette deuxième mémoire 7. Cependant, les broches de connexion d'un circuit intégré, étant de faible taille, sont fragiles et elles seraient susceptibles d'être détériorées lors des connexions et déconnexions successives, ce qui en diminuerait la fiabilité. De même, la fonction assurée par la carte-fille 8 peut aussi être portée par un module connecté directement sur le bus de fond de cage 13.

Les deuxièmes mémoires 7 des divers calculateurs peuvent ainsi recevoir la copie des informations relatives aux pannes et contenues dans les premières mémoires 6 associées. Dans un exemple de réalisation, cette recopie s'effectue en environ 3 minutes, quel que soit le nombre de calculateurs, au lieu d'environ 20 minutes par calculateur lorsqu'on sort les informations sur une imprimante thermique en utilisant la scrutation centralisée avec menu. Ces deuxièmes mémoires 7 sont alors transportées jusqu'à un calculateur de maintenance, disposant de moyens de visualisation performants, tels une imprimante parallèle à 144 colonnes ou un écran à 80 colonnes, qui fournissent l'information sous forme compacte. Ce calculateur de maintenance peut aussi être programmé pour effectuer une analyse des informations contenues dans ces deuxièmes mémoires 7, par exemple pour identifier un élément défaillant au moyen d'un programme de type système expert. De même, il peut comparer les informations fournies par les divers calculateurs, ce qui facilite le diagnostic.

## Revendications

1. Dispositif d'exploitation des informations relatives aux pannes détectées par une unité centrale (2) d'un aéronef qui est reliée par un bus (4) d'adresse et de données à une première mémoire (6) mémorisant ces informations, caractérisé en ce qu'il comporte :
- une deuxième mémoire (7) non volatile, amovible, connectable audit bus (4) ;
- des moyens de test de présence (20) pour détecter la présence éventuelle de ladite deuxième mémoire (7) ;
- des moyens de libération (21), aptes à libérer, pour d'autres tâches, l'unité centrale (2) ;
- des premiers moyens d'adressage en lecture (22) et des premiers moyens de mémorisation (23), respectivement aptes à lire, à des adresses prédéterminées, et à mémoriser :
. la valeur (MAO) de la première adresse de ladite première mémoire (6),
. la valeur (MBO) de la première adresse de ladite deuxième mémoire (7),
. le nombre d'adresses (T) de la première mémoire (6) dont le contenu est à transférer vers la deuxième mémoire (7) ;
- des deuxièmes moyens d'adressage en lecture (24) de la première mémoire (6) et des seconds moyens de mémorisation (25) temporaire du contenu correspondant ;
- des moyens d'adressage en écriture (26) de la deuxième mémoire (7) ;
- des moyens d'incrémentation (27), aptes à ajouter un incrément aux adresses (MAi, MBi) de la première mémoire (6) et de la deuxième mémoire (7) ;
- des moyens comparateurs (28), aptes à déterminer si le cumul desdits incréments est égal à un nombre prédéterminé, et, si oui, à commander lesdits moyens de libération (21) ;
- des moyens de branchement (29), commandés par lesdits moyens comparateurs (28), aptes, en cas d'inégalité détectée par ces derniers (28), à modifier l'adresse de programme à exécuter.

2. Dispositif selon la revendication 1, caractérisé en ce que ladite deuxième mémoire (7) est raccordée à l'unité centrale (2) par un support de circuit intégré.

3. Dispositif selon la revendication 1, caractérisé en ce que ladite deuxième mémoire (7) est implantée sur un module amovible (8).

4. Dispositif selon la revendication 3, caractérisé en ce que ledit module amovible (8) est porté par le module (1) de l'unité centrale (2).

5. Dispositif selon la revendication 4, caractérisé en ce que ledit module amovible (8) comporte des moyens de connexion (9) permettant l'enlèvement de ce module amovible (8) sans déconnecter le module (1) de l'unité centrale (2) du bus de fond de cage (13).

6. Dispositif selon l'une quelconque des revendications 3 à 5, caractérisé en ce que ledit module amovible (8) est implantable à l'emplacement d'un module de scrutation centralisée de ladite première mémoire (6).

7. Dispositif d'exploitation des informations relatives aux pannes, comportant plusieurs unités centrales (2) par aéronef mémorisant lesdites pannes dans des premières mémoires (6) respectivement reliées à l'unité centrale (2) correspondante par un bus (4) d'adresse et de données, caractérisé en ce qu'il comporte plusieurs dispositifs selon l'une quelconque des revendications 1 à 6.

## Patentansprüche

1. Vorrichtung zur Verarbeitung der Störungsinformationen, die von einer Zentraleinheit (2) eines Luftfahrzeugs erfaßt werden, die über einen Adreß- und Datenbus (4) mit einem ersten Speicher (6) zur Speicherung dieser Informationen verbunden ist, dadurch gekennzeichnet, daß sie umfaßt:
- einen zweiten nichtflüchtigen Wechselspeicher (7), der an den Bus (4) angeschlossen werden kann;
- Präsenz-Testmittel (20), um das mögliche Vorhandensein des zweiten Speichers (7) zu erfassen;
- Freigabemittel (21), durch die die Zentraleinheit (2) für andere Aufgaben freigegeben werden kann;
- erste Lese-Adressierungsmittel (22) und erste Speichermittel (23), die unter vorbestimmten Adressen ablesen bzw. speichern können:
. den Wert (MA0) der ersten Adresse des ersten Speichers (6),
. den Wert (MB0) der ersten Adresse des zweiten Speichers (7),
. die Adressenanzahl (T) des ersten Speichers (6), dessen Inhalt an den zweiten Speicher (7) zu übertragen ist;
- zweite Lese-Adressierungsmittel (24) des ersten Speichers (6) und zweite Mittel (25) zur zeitweiligen Speicherung des entsprechenden Inhalts;
- Schreib-Adressierungsmittel (26) des zweiten Speichers (7);
- Inkrementierungsmittel (27), durch die die Adressen (MAi, MBi) des ersten Speichers (6) und des zweiten Speichers (7) um ein Inkrement erhöht werden können;
- vergleichende Mittel (28), mit denen bestimmt werden kann, ob die Summe der Inkremente gleich einer vorbestimmten Anzahl ist, und mit denen im zutreffenden Fall die Freigabemittel (21) gesteuert werden können;
- Anschlußmittel (29), die durch die vergleichenden Mittel (28) gesteuert werden und die, wenn von diesen (28) eine Ungleichheit nachgewiesen wurde, die Adresse des auszuführenden Programms ändern können.

2. Vorrichtung nach Anspruch 1, dadurch gekennzeichnet, daß der zweite Speicher (7) an die Zentraleinheit (2) über einen Träger für integrierte Schaltungen angeschlossen ist.

3. Vorrichtung nach Anspruch 1, dadurch gekennzeichnet, daß der zweite Speicher (7) auf einem Wechselmodul (8) angebracht ist.

4. Vorrichtung nach Anspruch 3, dadurch gekennzeichnet, daß sich der Wechselmodul (8) auf dem Modul (1) der Zentraleinheit (2) befindet.

5. Vorrichtung nach Anspruch 4, dadurch gekennzeichnet, daß der Wechselmodul (8) Anschlußmittel (9) hat, die die Abnahme dieses Wechselmoduls (8) ermöglichen, ohne daß der Modul (1) der Zentraleinheit (2) vom Bus an der Gehäuserückwand (13) getrennt werden muß.

6. Vorrichtung nach einem der Ansprüche 3 bis 5, dadurch gekennzeichnet, daß der Wechselmodul (8) an der Stelle eines Moduls für die zentrale Abfrage des ersten Speichers (6) angebracht werden kann.

7. Vorrichtung zur Verarbeitung der Störungsinformationen, mit mehreren Zentraleinheiten (2) pro Luftfahrzeug, mit der die Störungen in ersten Speichern (6) gespeichert werden, die jeweils mit der entsprechenden Zentraleinheit (2) durch einen Adreß- und Datenbus (4) verbunden sind, dadurch gekennzeichnet, daß sie mehrere Vorrichtungen nach einem der Ansprüche 1 bis 6 umfaßt.

## Claims

1. Device for making use of information relating to the breakdowns detected by a central unit (2) of an aircraft, the unit being linked via an address and data bus (4) to a first memory (6) storing this information, characterized in that it comprises:
- a second non-volatile memory (7), which is removable and connectable to the said bus (4);
- presence test means (20) for detecting the possible presence of the said second memory (7);
- releasing means (21), able to release the central unit (2) for other tasks;
- first read addressing means (22) and first memory storage means (23) respectively able to read and to store at predetermined addresses:
· the value (MAO) of the first address of the said first memory (6),
· the value (MBO) of the first address of the said second memory (7),
· the number of addresses (T) of the first memory (6) whose contents are to be transferred to the second memory (7);
- second read addressing means (24) for the first memory (6) and second temporary memory storage means (25) for the corresponding contents;
- write addressing means (26) for the second memory (7);
- incrementation means (27), able to add an increment to the addresses (MAi, MBi) of the first memory (6) and of the second memory (7);
- comparator means (28), able to determine whether the total of the said increments is equal to a predetermined number, and, if yes, to drive the said releasing means (21);
- branching means (29), driven by the said comparator means (28), able, in the event of an inequality detected by the latter (28), to modify the program address to be executed.

2. Device according to Claim 1, characterized in that the said second memory (7) is connected to the central unit (2) via an integrated circuit medium.

3. Device according to Claim 1, characterized in that the said second memory (7) is installed on a removable module (8).

4. Device according to Claim 3, characterized in that the said removable module (8) is carried by the module (1) of the central unit (2).

5. Device according to Claim 4, characterized in that the said removable module (8) comprises connection means (9) permitting removal of this removable module (8) without disconnecting the module (1) of the central unit (2) from the backplane bus (13).

6. Device according to any one of Claims 3 to 5, characterized in that the said removable module (8) may be installed at the site of a centralized polling module of the said first memory (6).

7. Device for making use of information relating to the breakdowns, comprising several central units (2) per aircraft storing the said breakdowns in first memories (6) respectively linked to the corresponding central unit (2) via an address and data bus (4), characterized in that it comprises several devices according to any one of Claims 1 to 6.
